# EUROPÄISCHE PATENTSCHRIFT

(11) **EP 3 749 864 B1**
(45) Veröffentlichungstag und Bekanntmachung des Hinweises auf die Patenterteilung: **26.04.2023**
(21) Anmeldenummer: 19710598.4
(22) Anmeldetag: 04.02.2019
(51) Int. Cl.: F04D 27/00

(54) **VERFAHREN ZUR ERMITTLUNG VON BETRIEBSZUSTÄNDEN EINES VENTILATORS**
METHOD FOR DETERMINING OPERATING STATES OF A FAN
PROCÉDÉ DE DÉTERMINATION D'ÉTATS DE FONCTIONNEMENT D'UN VENTILATEUR

(30) Priorität: 05.02.2018 DE 102018201707
(43) Veröffentlichungstag der Anmeldung: 16.12.2020
(73) Patentinhaber: ZIEHL-ABEGG SE, 74653 Künzelsau (DE)
(72) Erfinder: WENGER, Bjoern, 74575 Schrozberg (DE); KAMMERER, Matthias, 74635 Kupferzell (DE); GAIDA, Xenia, 74676 Niedernhall (DE); KNORR, Joachim, 97996 Niederstetten (DE); OBST, Raphael, 74613 Öhringen (DE); PETERS, Michael, 74613 Öhringen (DE); SCHUEBEL, Dominik, 74653 Künzelsau (DE); KAPPEL, David, 74653 Künzelsau (DE)
(74) Vertreter: Ullrich & Naumann PartG mbB
(86) Internationale Anmeldenummer: PCT/DE2019/200007
(87) Internationale Veröffentlichungsnummer: WO 2019/149324

(56) Entgegenhaltungen:
- EP-A1- 1 510 805
- DE-A1-102008 005 690
- US-A- 5 210 704
- US-A1- 2016 132 050

## Beschreibung

Die Erfindung betrifft ein Verfahren zur Ermittlung von Betriebszuständen eines Ventilators, wobei der Begriff "Ventilator" im weitesten Sinne zu verstehen ist. Außerdem lässt sich die Lehre der Erfindung auch auf die Anordnung mehrerer Ventilatoren, Ventilatorgruppen oder Ventilatorsysteme übertragen. Im Falle der Anordnung mehrerer Ventilatoren geht es um das Zusammenspiel der Ventilatoren, insbesondere auch um eine Abstimmung zwischen den Ventilatoren. An dieser Stelle sei angemerkt, dass auch der Begriff "Ermittlung" im weitesten Sinne zu verstehen ist. Darunter fällt unter anderem auch die Berechnung der Betriebszustände, sofern dies möglich ist.

Der Erfindung liegt die Idee zugrunde, in jedem Betriebspunkt des Ventilators den bestmöglichen Wirkungsgrad und die bestmögliche Laufperformance zu gewährleisten. Aufgrund gegenläufiger Betriebsparameter ist dies schwierig.

Aus der Praxis eines Ventilators ist es bekannt, dass das Kugellager und das Kugellagerfett kritische Parameter für die Lebensdauer des Ventilators sind. Die Lebensdauer des Kugellagers und des Kugellagerfetts hängt maßgeblich von der Betriebstemperatur im bzw. am Motor und den auf das Kugellager wirkenden mechanischen Kräften ab. Da in unmittelbarer Nähe des Lagers weder Temperatursensoren noch Kraftsensoren positionierbar sind, lassen sich weder die Lagertemperatur noch auf das Lager wirkende Lagerkräfte messen. Folglich ist es erforderlich, diese Parameter entweder indirekt zu messen oder rechnerisch zu ermitteln.

Aus DE 10 2010 002 294 A1 ist ein System bzw. Verfahren zur Ermittlung des Zustands des Lagers einer elektrischen Maschine bekannt. Reale Sensoreinheiten ermitteln einen Messwert der an eine Simulationseinheit übermittelt wird. Mittels der Simulationseinheit wird ein Ergebniswert ermittelt, der entweder ein Lagerstrom-Wert oder ein vom Lagerstrom abhängiger Wert ist. Der Ergebniswert wird zur weiteren Berechnung einer weiteren Einheit übermittelt. Das bekannte System/ Verfahren ist aufgrund der erforderlichen Sensorik aufwändig und lässt sich bei Ventilatoren in Ermangelung eines hinreichenden Bauraumes nur schwer anwenden.

EP 1 510 805 A1 offenbart eine Vorrichtung und ein Verfahren zum Ermitteln einer Restlebensdauer eines Kugellagers. Hierzu werden zunächst an Testobjekten mit bekannten Abnutzungserscheinungen Kennlinien für Zusammenhänge zwischen Verschleißpartikelmenge und Vibrationen, Verschleißpartikelmenge und Lebensdauer, Schmiermittelmenge und Vibrationen sowie Schmiermittelmenge und Lebensdauer erzeugt. Für die Bewertung eines realen Kugellagers misst ein Beschleunigungssensor Vibrationen des Kugellagers. Aus den gemessenen Vibrationen und den Kennlinien wird die Restlebensdauer des Kugellagers geschätzt.

US 5 210 704 A offenbart ein System zur Vorhersage eines Ausfalls und zur Überwachung der Abnutzung eines Getriebes eines Helikopters und anderer rotierender Vorrichtungen. Hierzu werden mit mehreren Sensoren Messsignale erzeugt, die in ein Vorhersagesystem eingegeben werden. Das Vorhersagesystem schätzt basierend auf Erfahrungswissen anderer Systeme und basierend auf vorhergehender Messungen den Zustand der überwachten Vorrichtung ab.

DE 10 2008 005 690 A1 zeigt ein Verfahren zum Überwachen der Lebensdauer leistungselektronischer Baueinheiten. Es wird die Sperrschichttemperatur eines Bauelements erfasst und die Dauer von Temperaturhüben ausgewertet. Die erfassten Werte werden anhand von Belastungskennlinien ausgewertet und ermittelte Nutzungsverbrauchswerte zu einem Gesamtlebensdauerwert aufsummiert.

US 2016/0132050 A1 offenbart eine Vorrichtung zum Abschätzen der Restlebensdauer eines Elektromotors. Als Ausgangspunkt dient eine Lebensdauer bei unkritischen Betriebsbedingungen, wobei ein Betrieb des Elektromotors diese Lebensdauer sukzessive reduziert. Wenn der Elektromotor außerhalb der unkritischen Betriebsbedingungen betrieben wird, reduziert ein Korrekturfaktor die Lebensdauer stärker als bei unkritischen Betriebsbedingungen. Die Lagertemperatur wird aus einer Temperatur abgeschätzt, die durch einen Sensor auf einer Leiterplatte der Motorelektronik gemessen wird.

Der Erfindung liegt die Aufgabe zugrunde, in jedem Betriebspunkt eines Ventilators den bestmöglichen Wirkungsgrad und die bestmögliche Laufperformance mit einfachen konstruktiven Mitteln zu gewährleisten. Außerdem soll eine Lebensdauerbetrachtung möglich sein, um neue Services wie Predictive Maintainance, etc. realisieren zu können. Dabei gilt es zu berücksichtigen, dass es schwierig ist, die erforderliche Sensorik in geeigneten Positionen anzubringen. Erfindungsgemäß wird die voranstehende Aufgabe durch ein Verfahren mit den Merkmalen des Anspruchs 1 gelöst, wobei es sich dabei im Konkreten um ein Verfahren zur Ermittlung von Betriebszuständen eines Ventilators unter Nutzung eines digitalen Abbildes (digitaler Zwilling) des Ventilators handelt, bei dem mindestens ein betriebsparameterspezifischer Algorithmus hinzugezogen wird.

Genauer gesagt wird ein digitales Abbild des realen Ventilators durch Abbildung dessen Eigenschaften mittels mathematischer Berechnungsmodelle und gegebenenfalls unter Hinzuziehung bekannter Daten, ggf. realer Messdaten, geschaffen. Bei den realen Messdaten kann es sich um aktuelle Messdaten aus dem laufenden Betrieb jedes individuellen Motors (und ggf. seiner Historie) handeln. Des Weiteren wird mindestens ein betriebsparameterspezifischer Algorithmus unter Berücksichtigung bekannter Zusammenhänge und Kennlinien geschaffen und zur weiteren Berechnung hinzugezogen.

Es werden Bauteilzustände des Ventilators über das digitale Abbild mittels virtueller Sensoren ermittelt bzw. berechnet. Diese Bauteilzustände werden dem betriebs- oder betriebsparameterspezifischen oder produktspezifischen Algorithmus zugeführt, der aus den Bauteilzuständen konkrete Betriebsparameter des Ventilators ermittelt oder berechnet und gegebenenfalls, davon abgeleitet, den Betrieb des Ventilators betreffende Prognosen liefert, beispielsweise Prognosen zur Lebensdauer des Ventilators. Wesentlich ist, dass die kombinierte Nutzung ermittelter Bauteilzustände und realer Messdaten möglich ist.

Erfindungsgemäß werden zwei unterschiedliche Softwarekomponenten genutzt, nämlich eine erste Softwarekomponente betreffend den digitalen Zwilling und eine zweite Softwarekomponente betreffend den betriebsparameterspezifischen Algorithmus, den man als "intelligenten" Algorithmus bezeichnen kann.

Der digitale Zwilling ist ein digitales Abbild eines realen, individuellen Objekts, im Falle der erfindungsgemäßen Lehre eines Ventilators oder eines Ventilatorsystems. Der digitale Zwilling bildet die Eigenschaften des Ventilators mittels Berechnungsmodell und gegebenenfalls unter Hinzuziehung bekannter Daten des Ventilators ab. Die Aufgabe des digitalen Zwillings ist darin zu sehen, Bauteilzustände der Bauteile des Ventilators in Abhängigkeit des jeweiligen Betriebszustandes mit virtuellen Sensoren zu berechnen. Die auf Grundlage einer solchen Berechnung ermittelten Bauteilzustände werden an den betriebsparameterspezifischen Algorithmus übermittelt, der aus den Betriebsdaten des digitalen Zwillings Betriebsparameter oder Betriebszustände des Ventilators ermittelt/berechnet, beispielsweise die Lagerlebensdauer und/oder die Lagerfettlebensdauer. Aufgrund des Ergebnisses ist eine situationsgerechte Regelanpassung möglich. Betriebsparameter und Betriebszustände sind insoweit gleichermaßen relevant, als diese berechenbare Größen sind.

Die zuvor erörterte Kombination von digitalem Zwilling und betriebsparameterspezifischem Algorithmus lässt sich im Sinne eines digitalen Zwillingsalgorithmus auf einem dem Motor des Ventilators zuzuordnenden Mikroprozessor realisieren und somit dem Ventilator als festen Bestandteil zuordnen.

Die erfindungsgemäße Lehre, die sich unter dem Betriff "digitaler Zwillingsalgorithmus" zusammenfassen lässt, ist die Kombination eines den Ventilator beschreibenden digitalen Zwillings mit einer Art intelligentem Algorithmus, der betriebsparameterspezifisch ausgelegt ist.

Mit einem entsprechend ausgestalteten Ventilator lässt sich eine vorausschauende Instandhaltung betreiben, mit dem Ziel, einen Ventilatorausfall beispielsweise aufgrund eines schadhaften Lagers oder Lagerfetts zu vermeiden. Es wird eine situationsgerechte Anpassung der Systemparameter angestrebt, um nahezu die maximal mögliche Lebensdauer des Ventilators realisieren zu können.

Unter Nutzung eines digitalen Abbilds des Ventilators und betriebsparameterspezifischer Algorithmen wird im Rahmen der vorausschauenden Instandhaltung angestrebt, die Lebensdauer der Bauteile des Ventilators möglichst komplett auszuschöpfen und gleichzeitig jeglichen Ausfall des Ventilators zu vermeiden. Die Lebensdauer des Ventilators wird unter Zugrundelegung berechneter Bauteilzustände und daraus resultierender Betriebsparameter berechnet.

Der digitale Zwilling nutzt physikalische und/oder mathematische und/oder statistische und/oder empirische und/oder kombinierte Modelle, um thermische und mechanische Bauteilzustände zu berechnen. Sowohl mathematische als auch physikalische und nicht-physikalische Modelle gehören jedenfalls dazu. Der betriebsparameterspezifische Algorithmus (intelligenter Algorithmus) benötigt die vom digitalen Zwilling ermittelten Bauteilzustände, um beliebige Betriebsparameter zu ermitteln, beispielsweise auch um den Ventilatorausfall zu prognostizieren. Da die Lebensdauer eines Ventilators in erster Linie von den Kugellagern und dem Kugellagerfett abhängt, spielt die auf das Kugellagerfett und das Kugellager fokussierte Betriebsparameterberechnung eine ganz besondere Rolle.

Es ist aus der Praxis bekannt, dass die Lebensdauer von Lagerfett maßgeblich von der Betriebstemperatur abhängt. Je höher die Betriebstemperatur über die gesamte Lebensdauer ist, umso schneller wird das Lagerfett aufgebraucht. Folglich gilt es die Lagertemperatur zu ermitteln, um die Lagerfettlebensdauer zu bestimmen.

Zur Ermittlung der Lagertemperatur müsste ein Temperatursensor in unmittelbarer Umgebung des Lagers positioniert werden. Dies ist aufgrund der geometrischen und funktionellen Gegebenheiten des Ventilators/Motors nicht möglich. Entsprechend werden in erfindungsgemäßer Weise solche Bauteilzustände, wie die Lagertemperatur, über den digitalen Zwilling nebst betriebsparameterspezifischem Algorithmus berechnet.

Die Berechnung basiert auf einem mathematischen Modell, welches wiederrum auf einem reduzierten gekoppelten thermomagnetischen Berechnungsmodell basiert. Die Kombination aus digitalem Zwilling nebst betriebsparameterspezifischem Algorithmus berechnet Wärmequellen, Wärmesenken und den thermischen Zustand des den Motor des Ventilators betreffenden Gesamtsystems. So lässt sich über die virtuellen Sensoren des digitalen Zwillings die Lagerfetttemperatur in Abhängigkeit vom Betriebszustand des Ventilators/Motors bestimmen und in den betriebsparameterspezifischen Algorithmus als Betriebszustand einspeisen.

Sowohl der digitale Zwilling inklusive seiner virtuellen Sensoren als auch der betriebsparameterspezifische Algorithmus lässt sich im Maschinen-Code (C-Code) auf den bereits vorhandenen Mikroprozessor implementieren, wodurch dem Ventilator eine gewisse Maschinenintelligenz einverleibt wird.

Wenngleich das Entwicklungsverfahren und die Funktion des erfindungsgemäßen Verfahrens fortan am Beispiel der Lager- und Lagerfettlebensdauer erörtert wird, kann sich das Verfahren auf alle nur denkbaren Betriebsparameter des Ventilators beziehen. Die Anwendung des erfindungsgemäßen Verfahrens macht immer dann Sinn, wenn die jeweiligen Parameter nicht unmittelbar messbar sind, deren Kenntnis jedoch zur Optimierung des Betriebs des Ventilators herangezogen werden kann.

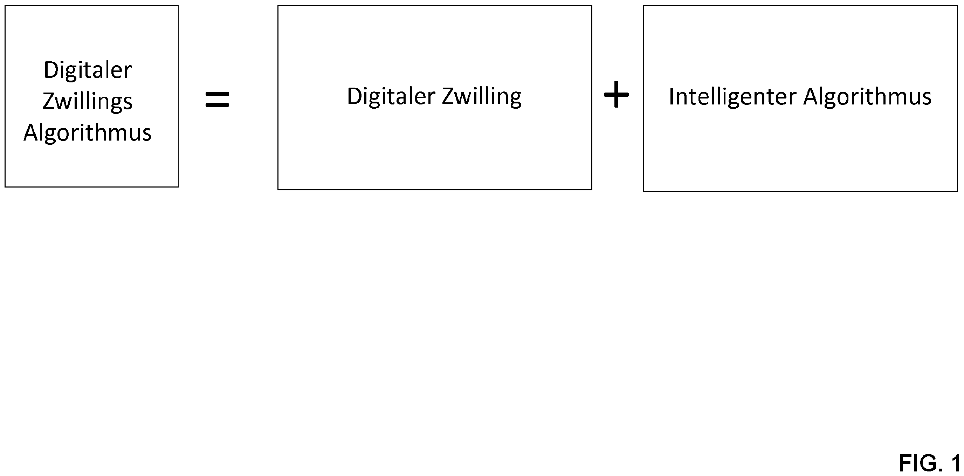

Es gibt verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1 bis 8: Verfahrensschritte zur Realisierung der erfindungsgemäßen Lehre mit besonderen Ausprägungen.

**Figur 1** zeigt das Prinzip des erfindungsgemäßen Verfahrens, wobei die Kombination des digitalen Zwillings mit mindestens einem betriebsparameterspezifischen Algorithmus (intelligenter Algorithmus) als digitaler Zwillingsalgorithmus bezeichnet wird, im folgenden Beispiel für die Lebensdauer des Lagerfetts und/oder des Lagers.

Wie bereits zuvor ausgeführt, hängt die Lebensdauer von Lagerfett und Lager von der Betriebstemperatur und der Drehzahl des Motors ab. Da kein Temperatursensor in unmittelbarer Umgebung des Lagers positionierbar ist, muss die Lagertemperatur mittels Modell berechnet werden, erfindungsgemäß mit dem digitalen Zwillingsalgorithmus, der sich aus einer Kombination von digitalem Zwilling und einem betriebsparameterspezifischen Algorithmus (intelligenter Algorithmus) ergibt.

Der digitale Zwilling ist nichts anders als ein mathematisches Modell, welches auf einem reduzierten gekoppelten thermomagnetischen und mechanischen Berechnungsmodell aufbaut. Der digitale Zwilling berechnet den thermischen und mechanischen Zustand des den Motor betreffenden Gesamtsystems. Durch die zum digitalen Zwilling gehörenden virtuellen Sensoren kann der digitale Zwilling die Lagerfetttemperatur in Abhängigkeit des Betriebszustands des Motors ermitteln.

Der intelligente Algorithmus benötigt zur Weiterverarbeitung der Daten die Bauteilzustände, um beispielsweise den Ventilatorausfall zu prognostizieren. Anhand von Ausfallkennlinien lässt sich das Versagen des Motors berechnen, zumindest aber abschätzen. Die gesamte den digitalen Zwillingsalgorithmus betreffende Software ist im Maschinen-Code (C-Code) auf dem Motormikroprozessor realisiert, so dass keine weitere Elektronik erforderlich ist.

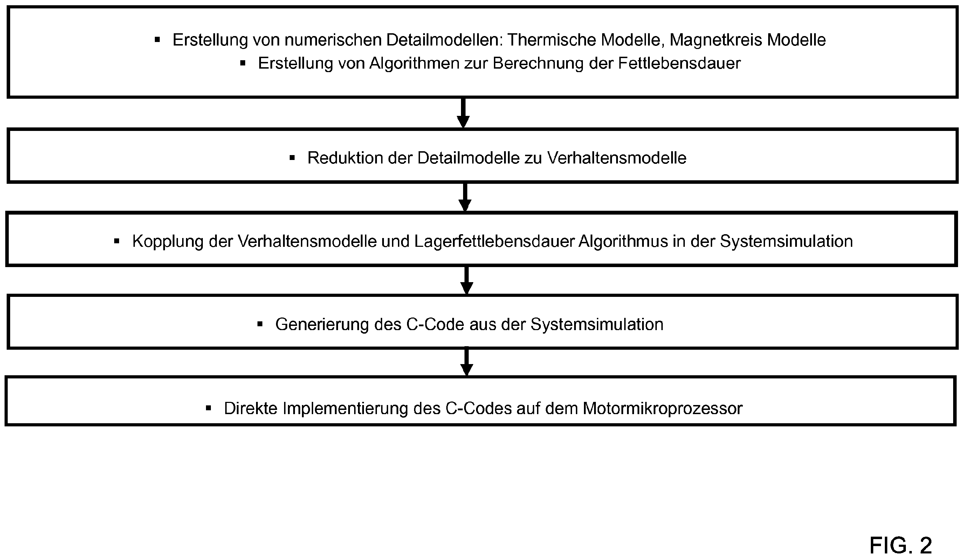

**Figur 2** zeigt den Ablauf der Lagerfettlebensdauerberechnung des Lagerfetts im Lager eines Ventilatormotors. Im Rahmen der Schaffung des digitalen Abbilds des realen Ventilators sind numerische Detailmodelle, im Konkreten thermische Modelle, Magnetkreismodelle, etc. erforderlich. Außerdem werden Algorithmen zur Berechnung der Fettlebensdauer erstellt.

Die Detailmodelle werden anschließend zu Verhaltensmodellen reduziert, damit das Datenvolumen handhabbar ist.

Anschließend findet eine Kopplung der Verhaltensmodelle und des die Lagerfettlebensdauer berechnenden Algorithmus in einer Systemsimulation statt, nämlich im Rahmen einer Kombination des digitalen Zwillings mit dem betriebsparameterspezifischen Algorithmus, der im vorliegenden Falle die Lagerfettlebensdauer berechnet. Aus der Systemsimulation wird der C-Code generiert und es findet eine direkte Implementierung des C-Codes auf dem Motormikroprozessor statt.

Wie bereits zuvor ausgeführt, ist die Modellreduktion des Detailmodells auf ein Verhaltensmodell erforderlich, um die Rechenzeit zu senken. Aufgrund dieser Maßnahme kann der digitale Zwillingsalgorithmus auf den Mikroprozessor des Motors realisiert werden. Für die thermische Modellreduktion lassen sich verschiedene Verfahren anwenden, beispielsweise das Verfahren nach Krylow. Dabei werden die Daten des Detailmodells durch Verringerung der Modellordnung reduziert.

Das magnetische Detailmodell kann durch einen Algorithmus oder durch eine Tabelle reduziert werden. In der Tabelle sind für bestimmte Konstellationen vorberechnete Ergebnisse definiert, so dass sich komplexe Berechnungen durch eine schnelle Wertsuche ersetzen lassen. Mit den entsprechend reduzierten Modellen kann die Lagerfetttemperatur und die Lagertemperatur berechnet werden. Die berechneten Werte nutzen den betriebsparameterspezifischen Algorithmus, hier den die Lagerfettlebensdauer berechnenden Algorithmus, um die Lebensdauer einerseits des Lagerfetts und andererseits des Lagers zu berechnen.

Außerdem ist es möglich, die verbrauchte Lebensdauer des Lagers/des Lagerfetts je nach Betriebstemperatur vorzugsweise exponentiell zu gewichten.

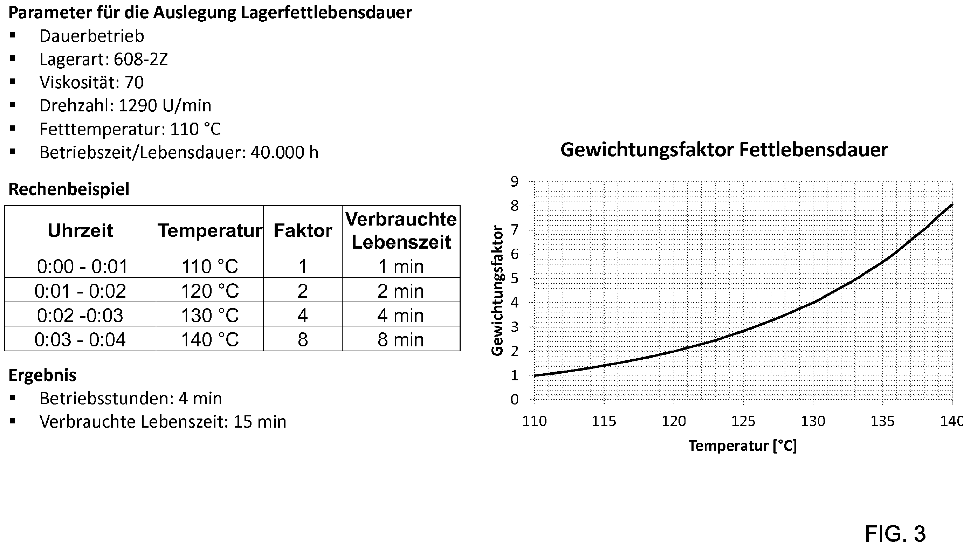

**Figur 3** zeigt den Verlauf eines solchen Gewichtungsfaktors über den Temperaturverlauf hinweg, wobei zur Lagerfettlebensdauerberechnung beispielhafte Parameter wie Dauerbetrieb, Lagerart, Viskosität, Drehzahl, Fetttemperatur und Betriebszeit/Lebensdauer zugrunde gelegt werden. Das Rechenbeispiel ergibt bei einer Betriebsdauer von vier Minuten eine verbrauchte Lebenszeit von 15 Minuten.

In erfindungsgemäßer Weise werden die reduzierten Modelle gemäß digitalem Zwilling und der betriebsparameterspezifische Algorithmus betreffend die Lagerfettlebensdauer in eine Systemsimulation eingebunden und miteinander verknüpft. Die Systemsimulation kann beispielsweise im Programm MATLAB erstellt werden. Mit dem Code-Generator von MATLAB ist es möglich, die Systemsimulation in den C-Code zu übersetzen und auf dem Motormikroprozessor zu implementieren.

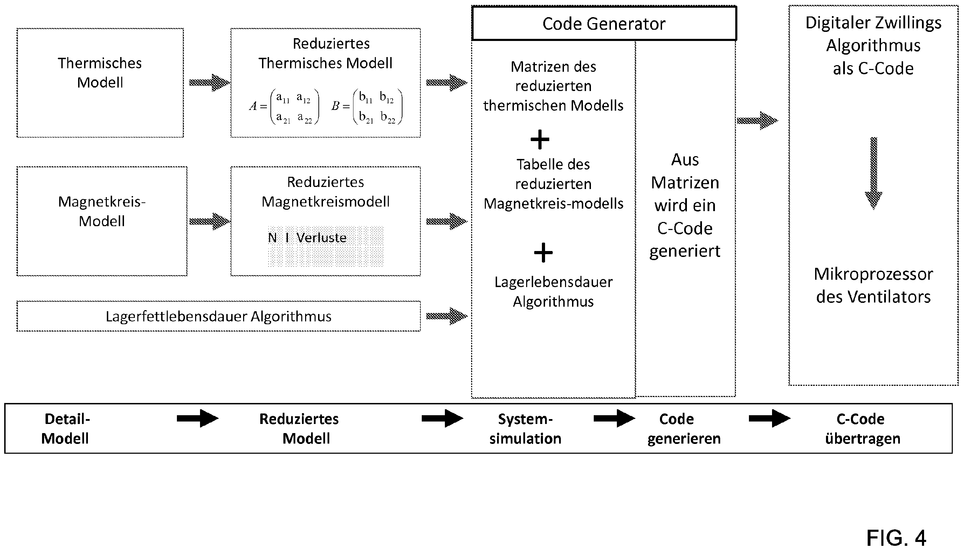

**Figur 4** zeigt am Beispiel der Lagerfettlebensdauerberechnung die Anwendung des erfindungsgemäßen Verfahrens, wobei der Modellbetrachtung des digitalen Zwillings ein thermisches Modell und ein Magnetkreismodell zugrunde gelegt werden. Beide Modelle werden in ein reduziertes thermisches Modell und ein reduziertes Magnetkreismodell überführt.

Der digitale Zwilling wird mit einem betriebsparameterspezifischen Algorithmus kombiniert, nämlich mit einem die Lagerfettlebensdauer ermittelnden Algorithmus.

Ausgehend von einem Detailmodell wird dieses reduziert, wird nämlich ein reduziertes Modell abgeleitet. Dieses reduzierte Modell kann in Matrizenform sein, wobei die Matrize in einer Systemsimulation in einen C-Code übersetzt wird, nämlich mit einem C-Code-Generator. Die Reduktion des Detailmodells kann auch auf andere Art erfolgen.

Aus dem Detailmodell resultiert somit ein reduziertes Modell. Unter Berücksichtigung des die Lagerfettlebensdauer berechneten Algorithmus findet eine Systemsimulation statt, aus der ein Code generiert wird. Dieser Code wird auf den Motormikroprozessor übertragen, vorzugsweise mit einer Berechnung in Echtzeit, im Gegensatz zu einer zeitversetzten Verarbeitung in der Cloud.

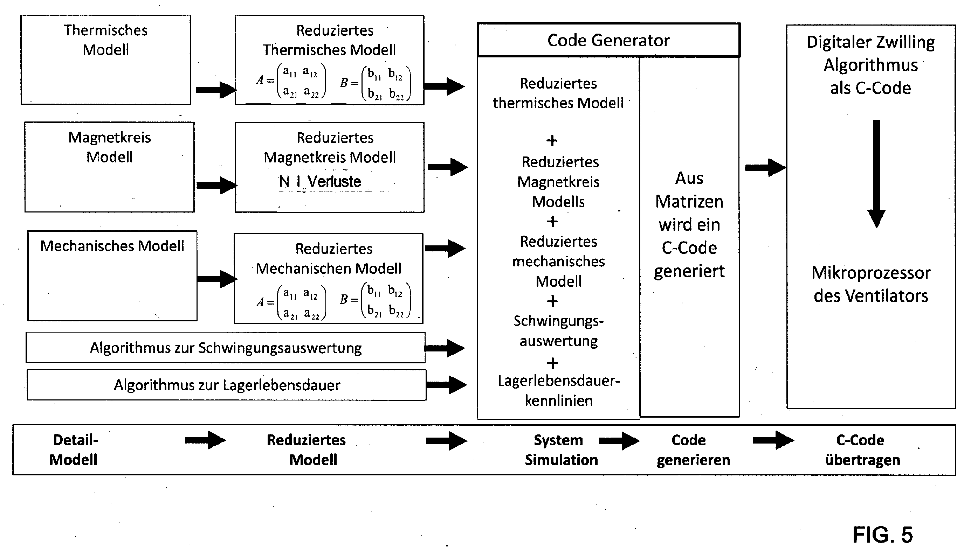

**Figur 5** zeigt die Berechnung der Lagerlebensdauer, wobei in Ergänzung zur Berechnung der in Figur 4 gezeigten Lagerfettlebensdauer ein mechanisches Modell hinzukommt, welches zu einem reduzierten mechanischen Modell gewandelt wird.

Zur weiteren Berechnung werden zwei betriebsparameterspezifische Algorithmen verwendet, nämlich zum einen zur Schwingungsauswertung und zum anderen zur Berechnung der Lagerlebensdauer.

Wie bei der Berechnung der Lagerfettlebensdauer findet eine Verknüpfung der Daten per Systemsimulation statt, wobei aus so gewonnenen Matrizen ein C-Code generiert wird. Dieser wird auf den Motormikroprozessor übertragen.

Voranstehende Ausführungen zur Berechnung der Lagerfettlebensdauer und Lagerlebensdauer machen deutlich, dass das erfindungsgemäße Verfahren und der daraus resultierende digitale Zwillingsalgorithmus eine Schlüsselfunktion zur "Digitalisierung" des Ventilators sind, da entscheidende Informationen berechnet und analysiert werden, und zwar unter Reduktion der insgesamt anfallenden Daten.

Die wesentlichen Informationen sind letztendlich Betriebszustände, die im Rahmen des digitalen Zwillings mit virtuellen Sensoren bestimmt werden, um damit die Lagerfettlebensdauer und die Lagerlebensdauer im Ventilator berechnen zu können.

An dieser Stelle sei angemerkt, dass mit dem erfindungsgemäßen Verfahren, d.h. mittels digitalem Zwillingsalgorithmus, anhand der virtuellen Sensoren jeder denkbare Betriebszustand berechenbar ist, was mit realen Sensoren aufgrund konstruktiver Grenzen und der mit solchen Sensoren verbundenen Kosten unmöglich ist.

Das erfindungsgemäße Verfahren ermöglicht unter Zugrundelegung der zuvor erörterten Datenreduktion einen kompakten C-Code zu erstellen, der auf Standardmikroprozessoren betrieben werden kann. Auf dem Mikroprozessor findet eine Art Datenveredelung (Big Data → Smart Data) statt, wobei dies das Berechnungsergebnis ist. Nur die komprimierten veredelten Daten werden weiterverarbeitet oder beispielsweise in eine Cloud versendet. Es ist selbstredend, dass sich dadurch das Streamingvolumen der Verbindung in die Cloud ganz erheblich reduziert. Außerdem ist es nur erforderlich, in beliebigen oder definierten Zeitabständen eine Abfrage der Restlebensdauer des Ventilators bzw. Motors vorzunehmen, wodurch sich ein lineares Verhalten oder ein Drift erkennen lässt. Wie bereits zuvor ausgeführt, lassen sich reale Sensoren zugunsten des Bauraums und zur Reduktion der Kosten einsparen.

Des Weiteren lassen sich die anhand des bei digitalen Zwillings und betriebsparameterspezifischen Algorithmus ermittelten Betriebsparameter zur vorausschauenden Instandhaltung und zur Instandhaltung eines Ventilators einerseits und zur Optimierung der Konstruktion und des Betriebs eines Ventilators andererseits verwenden.

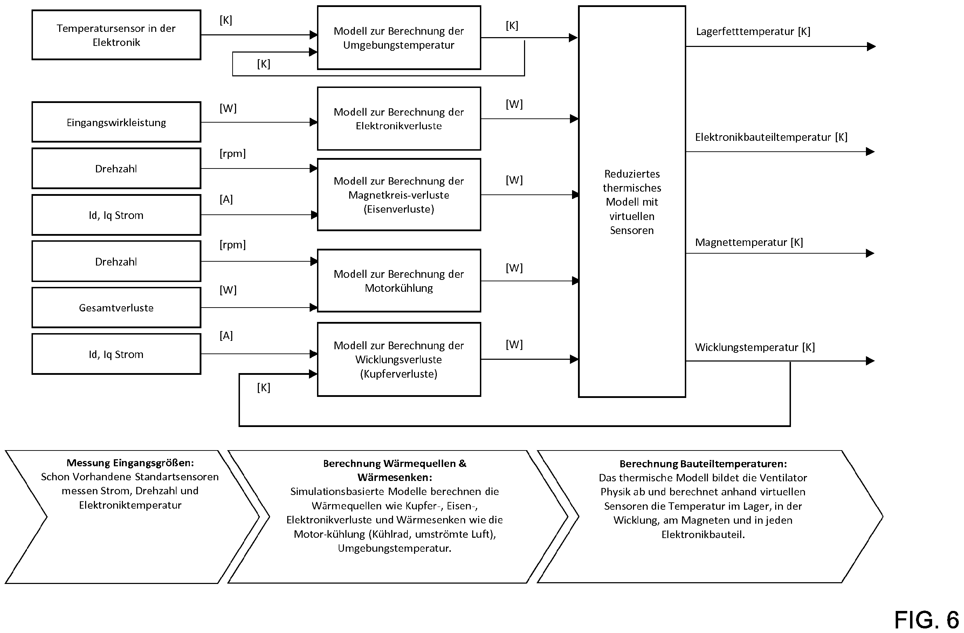

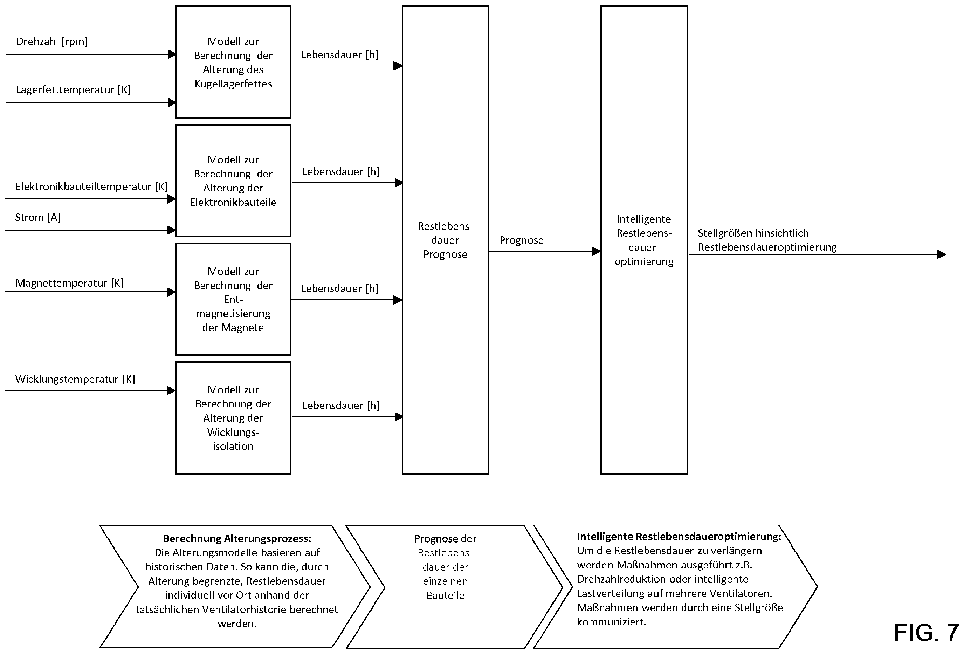

Die Darstellung in den **Figuren 6** **und** **7** dient zur weiterreichenden Erläuterung der beanspruchten Lehre, wie sie bereits beispielhaft unter Bezugnahme auf die Figuren 4 und 5 erörtert worden ist.

Wesentlich ist die Nutzung eines digitalen Abbilds, nämlich eines digitalen Zwillings des Ventilators. Der digitale Zwilling entsteht per Datenverarbeitung. Er entsteht im Konkreten aus einer Kombination bekannter Eingangsgrößen oder Sensormesswerten mit berechneten Werten und Berechnungen/Modellen. Anhand des digitalen Zwillings erfolgt die Ermittlung von Bauteiltemperaturen, Strömen, Verlusten, etc. an bestimmten vorgegebenen Stellen des Ventilators. Anhand des digitalen Zwillings werden reale Werte wie beispielsweise konkrete Bauteiltemperaturen virtuell bestimmt, nämlich dann, wenn an der jeweiligen konkreten Stelle des Ventilators keine wirtschaftlich/konstruktiv sinnvolle Möglichkeit der Messung mittels Sensorik besteht.

Von weiterer Bedeutung für die beanspruchte Lehre ist der betriebsparameterspezifische Algorithmus. Anhand der Ergebnisse bzw. Daten, die der digitale Zwilling liefert, beispielsweise der Lagertemperatur, werden Kenngrößen wie beispielsweise eine Ausfallwahrscheinlichkeit oder verbrauchte Lebensdauer des Ventilators bzw. des Lagers des Ventilators bestimmt. Diese Kenngrößen sind abhängig von den aktuellen Betriebsparametern des Ventilators und deren Historie, d.h. in welchen Betriebspunkten und Umgebungen der Ventilator betrieben wird/wurde.

Die Figuren 6 und 7 verdeutlichen anhand eines konkreten Beispiels das erfindungsgemäße Verfahren zur Ermittlung von Betriebszuständen eines Ventilators unter Nutzung eines digitalen Abbildes des Ventilators unter Berücksichtigung der voranstehenden Ausführungen.

In der linken Spalte von Figur 6 stehen gemessene oder berechnete Eingangsgrößen inklusive der den Pfeilen zugeordneten Einheiten. Diese Eingangsgrößen werden über vorhandene Standardsensoren gemessen oder sind bekannt.

Aus diesen Eingangsgrößen werden Wärmequellen und Wärmesenken berechnet. Zugrunde gelegt werden simulationsbasierte Modelle, die die Wärmequellen wie beispielsweise Kupfer-, Eisen-, Elektronikverluste und Wärmesenken wie die Motorkühlung (Kühlrad, umströmte Luft und Umgebungstemperatur) berücksichtigen. Daraus resultieren Eingangsgrößen für ein reduziertes thermisches Modell mit virtuellen Sensoren. Dies alles entspricht dem digitalen Zwilling im Sinne eines thermischen Modells.

Aus dem reduzierten thermischen Modell mit virtuellen Sensoren werden Bauteiltemperaturen berechnet. Das thermische Modell bildet dabei die Ventilatorphysik ab und berechnet anhand virtueller Sensoren die Temperatur im Lager, in der Wicklung, am Magneten und in den verschiedenen Elektronikbauteilen, je nach Bedarf.

Figur 7 zeigt als Fortsetzung von Figur 6 deutlich, dass Ausgangsgrößen aus dem reduzierten thermischen Modell, gegebenenfalls mit weiteren Parametern, als Eingangsgrößen zur Berechnung des Alterungsprozesses herangezogen werden. Zugrundeliegende Alterungsmodelle basieren auf historischen Daten und können als Kennlinien hinterlegt sein. So kann die, durch Alterung begrenzte, Restlebensdauer individuell vor Ort anhand der tatsächlichen Ventilatorhistorie und des aktuellen Betriebszustands berechnet oder korrigiert werden.

Aus den jeweiligen Modellen zur Berechnung der Alterung resultiert eine berechnete Lebensdauer in Tagen oder Stunden, die, für sich gesehen, als bloße Information dienen kann. Die diesbezüglichen Informationen können dann zur weiterführenden Prognose herangezogen werden, nämlich zur Prognose der Restlebensdauer der einzelnen Bauteile oder des gesamten Ventilators. Diese Prognose kann dann zur intelligenten Restlebensdauer-Optimierung genutzt werden. Um die Restlebensdauer zu verlängern können Maßnahmen ausgeführt werden, beispielsweise eine Reduktion der Drehzahl oder eine intelligente Lastverteilung auf mehrere Ventilatoren. Diese Maßnahmen können durch eine Stellgröße kommuniziert werden.

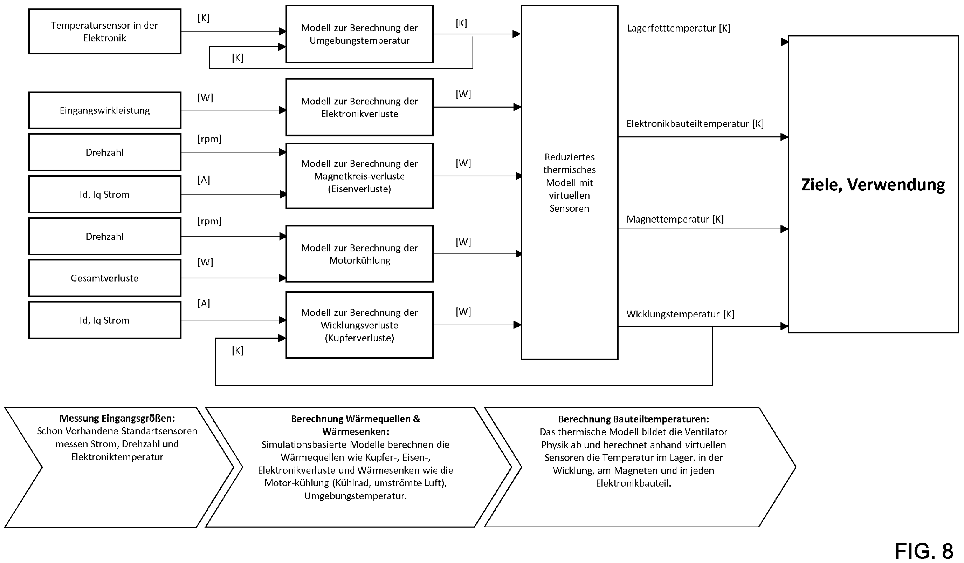

**Figur 8** zeigt noch einmal den digitalen Zwilling bis hin zum reduzierten thermischen Modell mit virtuellen Sensoren, wobei dadurch der Ventilator nebst Motor abgebildet wird. Wie bereits zuvor ausgeführt, bildet das thermische Modell die Ventilatorphysik ab und berechnet anhand virtueller Sensoren verschiedene Temperaturen, die zu unterschiedlichen Zwecken/Zielen/Verwendungen herangezogen werden, in Stichworten wie folgt:
**Zur Überwachung:** Ermittlung von Betriebsparametern mit Hilfe von virtuellen Sensoren und Nutzung dieser zur Überwachung. Dies können sein: Warnmeldungen, Status-LEDs, Kommentare in einem auslesbaren Fehler-Code, Abbildungen in Cloud oder App-Anwendung, Darstellung in User-Interfaces.

**Zu Predictive Maintenance:** Verfahren zur Ermittlung der Alterung eines Ventilators, bestehend aus zahlreichen Teilsystemen, wie Kugellager, Wicklung, Elektronikbauteile, Magnete und Prognose der Restlebensdauer. Nutzung zur z.B. Planung von Wartungsintervallen, zur Erreichung einer möglichst langen Lebensdauer bevor Wartungsintervall (d.h. kein zu frühes Warten), automatische Terminplanung von Wartungsterminen, Meldung von Wartungsnotwendigkeit, automatische Bestellung von Ersatzteilen.

**Zur Optimierung:** Verfahren zur Ermittlung von Betriebszuständen die Produktperformance betreffend, d.h. Wirkungsgrad, Bauteiltemperaturen, Drehzahl, Ausgangsleistung, Volumenstrom, Lautstärke, Schwingungen, etc.

**Zur Schaffung eines intelligenten Ventilators:** Reaktion auf bestimmte Betriebszustände zur Verbesserung des Verhaltens oder zur Erreichung bestimmter Ziele.
- Veränderung des Betriebspunktes/Veränderung der Regelparameter für optimalen Wirkungsgrad.
- Veränderung des Betriebspunktes um möglichst lange Lebensdauer zu erreichen.
- Verringerung der Drehzahl, wenn Ausfallwahrscheinlichkeit sehr hoch ist.
- Veränderung des Betriebspunktes bei Tag-Nacht-Rhythmus für möglichst leise Nachtanwendung.
- Ausgabe einer Stellgröße für Zusatzgeräte oder Kundengeräte, z.B. Temperaturausgabe zur Nutzung in Regelung einer Wärmepumpe, oder für eine zusätzliche Kühlung.
- Gezielte Umgehung kritischer Systemzustände (z.B. Resonanzen, Übertemperaturen, etc.).

Zur Schaffung von Detailmodellen ist folgendes relevant:
Ein Modell ist grundsätzlich ein Abbild oder eine Approximation an die Realität, das heißt definitionsgemäß eine Annäherung. Ein Modell beschränkt sich immer auf einen Ausschnitt, der für die angestrebte Abbildung von Interesse ist. Außerdem ist ein Modell grundsätzlich nicht vollständig, da es entweder für die einfachere Verwendung in Bezug auf dessen notwendige Eingabegrößen reduziert wird, oder einzelne physikalische Verhaltenselemente bei der Modellerstellung nicht bekannt sind. Abhängig von der späteren Nutzung und Zielsetzung ist eine andere Art Modellbildung notwendig, d.h. zum Beispiel eine anderer betrachteter Bereich, eine notwendige andere Genauigkeit in den Ergebnissen oder Schnelligkeit der Berechnung. Es gibt sehr viele Arten von Modellen, wobei im technischen Bereich meist ein Modell mit einer mathematischen Darstellung verbunden wird, beispielsweise mit algebraischen Gleichungen oder Ungleichungen, Systemen gewöhnlicher oder partieller Differentialgleichungen, Zustandsraumdarstellungen, Tabellen, Graphen.

Fester Bestandteil in der heutigen Produktentwicklung ist die virtuelle Produktentwicklung unter Verwendung der FE-Simulation (Finite Elemente Simulation). Klassischerweise wird hier eine physikalische Domäne (z.B. Festigkeit oder Thermik oder Magnetkreis) in einem sehr großen (Größenordnung 100 Gigabyte) und rechenintensiven Modell abgebildet und die Ergebnisse an Millionen Stellen (Knoten) im Modell bestimmt. Dies ist eine Variante von Detailmodellen. Der grobe Ablauf in der Erstellung dieser Detailmodelle lässt sich wie folgt skizzieren:
1. Import einer 3D-Geometrie zum Beispiel aus dem Bereich der CAD,
2. Zuweisung von Randbedingungen, d.h. feste Einspannungen, Materialdefinitionen, Kontaktbedingungen (Klebestellen, gleitende Verbindungen, Wärmeisolation),
3. Vernetzung (Auftrennen der Geometrie in Millionen kleine Elemente, die verknüpft sind,
4. Aufbringen der Belastung, also Kräfte, Wärmequellen-/senken, magnetische Felder,
5. Automatisches Lösen der sich ergebenden Differentialgleichungen für jedes einzelne Element und Zusammenfügen zu einem großen Ergebnis für das Gesamtmodell,
6. Bewertung der Ergebnisse.

Die Erzeugung der reduzierten Modelle vollzieht sich wie folgt:
Eine Modellreduktion beschreibt ganz allgemein ein bereits bestehendes Modell, um weitere Informationen zu reduzieren, um es zum Beispiel auf Speicherbedarf oder Rechengeschwindigkeit zu optimieren. Hier gibt es abhängig vom konkreten Anwendungsfall viele Varianten wie zum Beispiel:
▪ Annäherung von einfachen mathematischen Funktionen, wie zum Beispiel Polynomfunktionen und lediglich Abspeichern der Koeffizienten.
▪ Ablegen von Tabellen für verschiedene Eingangsgrößen und anschließend entweder Verwendung von diesen diskreten Werten oder Interpolation zwischen den Werten.
▪ Annäherung von statistischen Modellen, die Prognosen aus bisherigen Werten liefern.
▪ Graphen/logische Gatter, Beispiel: Wenn T>200°C, dann Ventilator defekt.

### Erzeugung der reduzierten Modelle - Beispiel a)

Ausgangspunkt für das reduzierte Modell ist ein FE-Modell der Thermik, das abhängig von Wärmeeingang und Wärmeausgang die Temperaturen in jedem Punkt des Modells abbildet. Im folgenden Beispiel wird die Modellreduktion auf lediglich einen Wärmeeingang und einen Wärmeausgang, nur eine zu bestimmende Temperatur an der Stelle A und nur jeweils die Werte "hoch" und "niedrig" vereinfacht. Hierzu wird eine Parameterstudie durchgeführt, wodurch diese sogenannte "Look-Up-Tabelle" ermittelt wird.

| Temperatur an der Stelle A | Wärmeeingang = Niedrig = 1W | Wärmeeingang = Hoch = 11W |
|---|---|---|
| Wärmeausgang= Niedrig = 1W | 40°C | 80°C |
| Wärmeausgang = Hoch = 5W | 20°C | 60°C |

Anschließend gibt es mehrere Möglichkeiten die Ergebnisse zu verwenden.
▪ Verwendung der Tabelle direkt und diskret. Beispiel: Wenn eine Temperatur an der Stelle A für einen Wärmeeingang von 4W und Wärmeausgang von 1W prognostiziert werden soll, wird direkt der Wert von 40°C übernommen.
▪ Verwendung der Tabelle und lineare Interpolation zwischen den Werten. Beispiel: Wenn eine Temperatur an der Stelle A für einen Wärmeeingang von 5W und Wärmeausgang von 1W prognostiziert werden soll, wird der Wert von 60°C über lineare Interpolation bestimmt.
▪ Verwendung der Tabelle zur Bestimmung einer Temperaturprognosefunktion mittels Regression. Beispiele für Zielfunktionen sind Polynomfunktionen, lineare Funktionen, Exponential-Funktionen, statistische Funktionen, Differentialgleichungen, etc. Anschließend Bestimmung der Temperatur mit Hilfe dieser Funktion.

### Erzeugung der reduzierten Modelle - Beispiel b)

Ausgangspunkt für das reduzierte Modell ist ein FE-Modell der Thermik, das abhängig von Wärmeeingang und Wärmeausgang die Temperaturen in jedem Punkt des Modells abbildet. Im Anschluss darauf können mit mathematischen Annahmen, Berechnungen und Umformungen (zum Beispiel LTI-System oder Krylov-Unterraum-Verfahren) kompakte Zustandsraummodelle angenähert werden. Diese bestehen aus zwei wesentlichen Differential- bzw. Integralgleichungen und vier, das gesamte System beschreibenden, Matrizen (zum Beispiel 200x200 Matrizen gefüllt mit skalaren Zahlenwerten). Diese stellen jedoch nicht mehr die Temperatur an Millionen Knoten dar, sondern nur an wenigen ausgewählten Stellen. Außerdem kommt es durch die Näherung zu einer Abweichung der Ergebnisse abhängig von der Größe des Zustandsraummodells. Grundsätzlich gilt je größer das Modell und seine Matrizen, desto geringer die Abweichung.

Zustandsraummodelle sind als Prozeduren, Module oder Objekte in vielen Computer-Algebra-Programmen wie zum Beispiel Matlab oder auch in Programmiersprachen standardmäßig vorhanden, wodurch derartige Modelle durch simplen Import der Matrizen berechnet werden können. Eingangsgrößen sind hier zum Beispiel Wärmeleistung, die in das System eingeht und Wärmesenken durch Konvektion, Ausgangsgrößen sind zum Beispiel bestimmte Bauteiltemperaturen (z.B. drei verschiedene Bauteiltemperaturen).

### Erzeugung der reduzierten Modelle - Beispiel c)

Ausgangspunkt für die Modellreduktion sind in diesem Beispiel experimentelle Ergebnisse. Hier würde ebenso wie in Beispiel a) eine Tabelle aus Messergebnissen erstellt werden und anschließend äquivalent dazu damit weiterfahren werden (diskrete Verwendung, lineare Interpolation oder Regression mittels mathematischer Funktionen).

Von weiterer Bedeutung kann eine Kopplung von physikalischen Domänen oder verschiedenen Modellen sein.

Klassischerweise werden in der virtuellen Produktentwicklung Domänen einzeln betrachtet, da eine gemeinsame Betrachtung sehr rechen- und speicheraufwendig und kaum praktikabel ist. Durch die Modellreduktion ergibt sich die Möglichkeit die Modelle verschiedener Domänen zu koppeln. Zum Beispiel ist die Kopplung eines detaillierten Magnetkreismodells, dessen Rechenzeit auf einem leistungsstarken Rechencluster mehrere Tage bis Wochen beträgt, mit einem thermischen Modell nicht von Vorteil. Durch die Reduktion der Detailmodelle werden die benötigte Rechenleistung und der Speicherbedarf niedriger und so die Kopplung der Modelle hinsichtlich des wirtschaftlichen Aspekts ermöglicht. Diese ist in vielen Fällen zur möglichst genauen Abbildung des realen Verhaltens notwendig.

### Kopplung von physikalischen Domänen oder verschiedenen Modellen - Beispiele

▪ Der Wicklungswiderstand ist näherungsweise linear abhängig von der Temperatur des Kupfers. Abhängig vom Wicklungswiderstand ändert sich die Verlustleistung in der Wicklung näherungsweise linear. Abhängig von der Verlustleistung ändert sich das thermische Verhalten, zum Beispiel Wicklungs- und Lagertemperatur stark nicht-linear, was sich wiederum auf den Wicklungswiderstand auswirkt. Hier ist somit je nach Anforderung an die Ergebnisse des Modells eine Kopplung notwendig.
▪ Das notwendige Drehmoment und die Drehzahl eines Ventilators sind stark abhängig vom Anlagenwiderstand und zum Beispiel Druckdifferenz und Temperatur des Fördermediums. Abhängig vom Lastmoment ändert sich das Verhalten des Magnetkreises, d.h. Ströme durch die Wicklung, magnetisches Feld, Drehzahl, etc. Abhängig davon ändern sich dann auch Leistungsaufnahme, Verluste und erreichbare Drehzahl. Auch hier ist im Falle einer Kundenanwendung die Kopplung des Ventilatorverhaltens mit der Einbausituation je nach Anwendungsfall vorstellbar.

### Konkretisierung einer technischen Umsetzung - Beispiel a)

▪ Erstellung eines thermischen FE-Modells eines Ventilators →Rechenintensives und speicherintensives FE-Modell mit 1.000.000 Elementen zusätzlich zur Polynomfunktion. Wärmequellen und -senken sind als Polynomfunktionen abhängig von Eingangsstrom und Drehzahl abgebildet.
▪ Erstellung eines reduzierten thermischen Modells über statistische Methoden, das die Elektronikbauteiltemperatur abhängig von Eingangsstrom und Drehzahl abbildet. → Polynomfunktion, die Temperatur abhängig von Eingangsstrom und Drehzahl beschreibt = virtueller Temperatursensor.
▪ Kennlinie aus Datenblatt zur Lebensdauer des Elektronikbauteiles abhängig von seiner Temperatur → Betriebsparameterspezifischer Algorithmus, der aus virtuellem Temperatursensor die Ausfallwahrscheinlichkeit berechnet.
▪ Nutzung für Predictive Maintenance, zur Überwachung oder zur Optimierung des Betriebspunktes → Intelligenter Algorithmus.

### Konkretisierung einer technischen Umsetzung - Beispiel b)

▪ Erfassung von Stromzeiger und Motordrehzahl durch integrierte Elektronik/ Regelung. Daraus wird der elektromagnetische Arbeitspunkt abgeleitet.
▪ Anhand dieses Arbeitspunktes ergeben sich über Look-Up-Tabellen oder Polynomfunktionen die Verluste von Motor und Leistungselektronik.
▪ Ein thermisches Modell verarbeitet die Verlustwerte und ermittelt Temperaturen kritischer Systembestandteile wie Kugellager oder Halbleiterbauteile.
▪ Gleichzeitig werden über einen realen Sensor Bauteilschwingungen aufgezeichnet. Die lokalen Schwingungen werden durch Verhaltensmodelle auf das Gesamtsystem virtuell projiziert, wodurch zum Beispiel die Lagerbelastung aufgrund von Schwingungen abgeschätzt wird.
▪ Mithilfe betriebsparameterspezifischer Algorithmen werden ermittelte Temperaturen und Schwingwerte in eine Abschätzung der Bauteil- und Ventilatorlebensdauer umgerechnet.
▪ Weitergreifende Maßnahmen wie die Predictive Maintenance können dadurch ermöglicht werden.
▪ Gleichzeitig kann mit der Kenntnis der Verluste der Arbeitspunkt und der Systemwirkungsgrad durch regelungstechnische Anpassungen, wie zum Beispiel die Variation des Vorsteuerwinkels optimiert werden.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränkt.

## Patentansprüche

1. Verfahren zur Ermittlung von Betriebszuständen eines Ventilators unter Nutzung eines digitalen Abbildes - digitaler Zwilling - des Ventilators und mindestens eines betriebsparameterspezifischen Algorithmus, mit folgenden Verfahrensschritten:
Schaffen des digitalen Abbildes des realen Ventilators durch Abbildung dessen Eigenschaften mittels mathematischer Berechnungsmodelle und ggf. bekannter Daten,
Schaffen des mindestens einen betriebsparameterspezifischen Algorithmus unter Berücksichtigung bekannter Zusammenhänge und Kennlinien,
Berechnung von Bauteilzuständen des Ventilators über das digitale Abbild mittels virtueller Sensoren,
Übertragung der Bauteilzustände an den Algorithmus, der aus den Bauteilzuständen Betriebsparameter des Ventilators berechnet und ggf. den Betrieb des Ventilators betreffende Prognosen liefert.

2. Verfahren nach Anspruch 1, **dadurch gekennzeichnet, dass** dem digitalen Abbild als mathematisches und/oder physikalisches und/oder empirisches und/oder statistisches oder als kombiniertes Modell ein thermisches und/oder mechanisches und/oder Magnetkreis-Berechnungsmodell zugrunde gelegt wird.

3. Verfahren nach Anspruch 1 oder 2, **dadurch gekennzeichnet, dass** das jeweilige Berechnungsmodell von einem Detailmodell in ein reduziertes Modell überführt wird.

4. Verfahren nach einem der Ansprüche 1 bis 3, **dadurch gekennzeichnet, dass** das digitale Abbild zur Berechnung des thermischen und/oder mechanischen Zustand des Ventilators, insbesondere des Motors des Ventilators, dient.

5. Verfahren nach einem der Ansprüche 1 bis 4, **dadurch gekennzeichnet, dass** durch die virtuellen Sensoren des digitalen Abbildes, unter Nutzung der Berechnungsmodelle, die Bauteiltemperaturen in Abhängigkeit des Betriebszustandes ermittelt werden.

6. Verfahren nach einem der Ansprüche 1 bis 5, **dadurch gekennzeichnet, dass** der mindestens eine betriebsparameterspezifische Algorithmus unter Berücksichtigung der Bauteilzustände, ggf. unter Berücksichtigung von Ausfallkriterien oder einer Ausfallkennlinie, Ventilatorausfallkriterien berechnet oder den zu erwartenden Ventilatorausfall prognostiziert.

7. Verfahren nach einem der Ansprüche 1 bis 6, **dadurch gekennzeichnet, dass** das digitale Abbild und dessen vorzugsweise reduzierten Modelle und der mindestens eine betriebsparameterspezifische Algorithmus in eine Systemsimulation mittels Simulationsprogramm eingebunden werden.

8. Verfahren nach Anspruch 7, **dadurch gekennzeichnet, dass** die Software des digitalen Abbilds und des mindestens einen betriebsparameterspezifischen Algorithmus, vorzugsweise in Form des Simulationsprogramms, auf einem Mikroprozessor, vorzugsweise in Maschinen-Code (C-Code), implementiert wird.

9. Verfahren nach Anspruch 8, **dadurch gekennzeichnet, dass** der Mikroprozessor unmittelbar dem elektrischen Motor des Ventilators zugeordnet ist.

10. Verfahren nach einem der Ansprüche 1 bis 9, **dadurch gekennzeichnet, dass** es sich bei den Betriebsparametern um die Lagerlebensdauer und/oder die Lagerfettlebensdauer handelt.

11. Verfahren nach einem der Ansprüche 1 bis 10, **dadurch gekennzeichnet, dass** die ermittelten Betriebsparameter zur vorausschauenden Instandhaltung des Ventilators genutzt werden.

## Claims

1. Method for establishing operating states of a fan using a digital image - digital twin - of the fan and at least one operating-parameter-specific algorithm, having the following method steps:
providing the digital image of the actual fan by imaging the properties thereof by means of mathematical calculation models and where applicable known data,
providing the at least one operating-parameter-specific algorithm taking into account known relationships and
characteristic lines,
calculating component states of the fan via the digital image by means of virtual sensors,
transmitting the component states to the algorithm, which calculates operating parameters of the fan from the component states and where applicable provides forecasts relating to the operation of the fan.

2. Method according to claim 1, **characterised in that** a thermal and/or mechanical and/or magnetic circuit calculation model is taken as a basis for the digital image as a mathematical and/or physical and/or empirical and/or statistical model or as a combined model.

3. Method according to claim 1 or 2, **characterised in that** the respective calculation model is transferred from a detailed model into a reduced model.

4. Method according to any one of claims 1 to 3, **characterised in that** the digital image is used to calculate the thermal and/or mechanical state of the fan, in particular the motor of the fan.

5. Method according to any one of claims 1 to 4, **characterised in that**, as a result of the virtual sensors of the digital image, using the calculation models, the component temperatures are established in accordance with the operating state.

6. Method according to any one of claims 1 to 5, **characterised in that** the at least one operating-parameter-specific algorithm calculates fan failure criteria taking into account the component states, where applicable taking into account failure criteria or a failure characteristic line, or predicts the fan failure to be anticipated.

7. Method according to any one of claims 1 to 6, **characterised in that** the digital image and the preferably reduced models thereof and the at least one operating-parameter-specific algorithm are incorporated in a system simulation by means of a simulation program.

8. Method according to claim 7, **characterised in that** the software of the digital image and the at least one operating-parameter-specific algorithm is implemented, preferably in the form of the simulation program, on a microprocessor, preferably in machine code (C code).

9. Method according to claim 8, **characterised in that** the microprocessor is directly associated with the electric motor of the fan.

10. Method according to any one of claims 1 to 9, **characterised in that** the operating parameters are the bearing service-life and/or the bearing grease service-life.

11. Method according to any one of claims 1 to 10, **characterised in that** the established operating parameters are used for predictive maintenance of the fan.

## Revendications

1. Procédé pour la détermination d'états de fonctionnement d'un ventilateur à l'aide d'une représentation numérique - jumeau numérique - du ventilateur et d'au moins un algorithme spécifiques aux paramètres de fonctionnement, avec les étapes suivantes :
création de la représentation numérique du ventilateur réel par la représentation de ses propriétés au moyen de modèles de calcul mathématiques et, le cas échéant, de données connues,
création de l'au moins un algorithme spécifique aux paramètres de fonctionnement en tenant compte de relations et courbes caractéristiques connues,
calcul des états des composants du ventilateur par l'intermédiaire de la représentation numérique au moyen de capteurs virtuels,
transmission des états des composants à l'algorithme, qui calcule, à partir des états des composants, les paramètres de fonctionnement du ventilateur et, le cas échéant, délivre des pronostics concernant le fonctionnement du ventilateur.

2. Procédé selon la revendication 1, **caractérisé en ce que** la représentation numérique est basée sur un modèle mathématique et/ou physique et/ou empirique et/ou statistique ou, en tant que modèle combiné, sur un modèle de calcul thermique et/ou mécanique et/ou à circuit magnétique.

3. Procédé selon la revendication 1 ou 2, **caractérisé en ce que** le modèle de calcul correspondant est transféré d'un modèle détaillé à un modèle réduit.

4. Procédé selon l'une des revendications 1 à 3, **caractérisé en ce que** la représentation numérique permet le calcul de l'état thermique et/ou mécanique du ventilateur, plus particulièrement du moteur du ventilateur.

5. Procédé selon l'une des revendications 1 à 4, **caractérisé en ce que**, grâce aux capteurs virtuels de la représentation numérique, à l'aide des modèles de calcul, les températures de composants sont déterminées en fonction de l'état de fonctionnement.

6. Procédé selon l'une des revendications 1 à 5, **caractérisé en ce que** l'au moins un algorithme spécifique aux paramètres de fonctionnement calcule, en tenant compte des états des composants, le cas échéant en tenant compte de critères de défaillance ou d'une courbe caractéristique de défaillance, des critères de défaillance du ventilateur ou pronostique la défaillance attendue du ventilateur.

7. Procédé selon l'une des revendications 1 à 6, **caractérisé en ce que** la représentation numérique et ses modèles, de préférence réduits, et l'au moins un algorithme spécifique aux paramètres de fonctionnement sont intégrés dans une simulation de système au moyen d'un programme de simulation.

8. Procédé selon la revendication 7, **caractérisé en ce que** le logiciel de la représentation numérique et de l'au moins un algorithme spécifique aux paramètres de fonctionnement est implémenté, de préférence sous la forme du programme de simulation, sur un microprocesseur, de préférence en code machine (code C).

9. Procédé selon la revendication 8, **caractérisé en ce que** le microprocesseur correspond directement au moteur électrique du ventilateur.

10. Procédé selon l'une des revendications 1 à 9, **caractérisé en ce que** les paramètres de fonctionnement sont la durée de vie des paliers et/ou la durée de vie de la graisse de palier.

11. Procédé selon l'une des revendications 1 à 10, **caractérisé en ce que** les paramètres de fonctionnement déterminés sont utilisés pour la maintenance préventive du ventilateur.
